**Europäisches Patentamt**

**European Patent Office**

**Office européen des brevets**

(11) Publication number: **0 042 707**

**A1**

## EUROPEAN PATENT APPLICATION

(21) Application number: **81302642.4**

(22) Date of filing: **15.06.81**

(51) Int. Cl.³: **G 06 K 7/08**

(30) Priority: **13.06.80 GB 8019407**
**25.10.80 GB 8034440**

(43) Date of publication of application:
**30.12.81 Bulletin 81/52**

(84) Designated Contracting States:
**BE CH DE FR GB IT LI LU NL SE**

(71) Applicant: SECURITAS INTERNATIONAL PRODUCTS
LIMITED
Farncombe House Broadway
Worcestershire(GB)

(72) Inventor: Spray, Stuart Ambrose
Treetops Broomsgreen
Dymock Gloucestershire(GB)

(72) Inventor: Prior, Andrew John
18 Hawkwood Close
Malvern Worcestershire(GB)

(74) Representative: Stephens, Michael John et al,
M.J. Stephens & Co. Royal Building 11 St. Andrew's
Cross
Plymouth Devon PL1 2DS(GB)

(54) **Token reader.**

(57) A token reader has a first array of flat spiral transmitter coils (8) mounted on a printed circuit board (6) and a second array of corresponding flat spiral receiver coils (11) mounted on a printed circuit board (7). Selective inhibition of the electromagnetic coupling between the transmitter and receiver coils is effected by conductive inserts (13) carried on an insulating card token (4) which is inserted between the two coil arrays, to provide a coded output from the receiver coils (11), for amplification and comparison in an electronic security checking system (18-21).

Fig.2.

Croydon Printing Company Ltd.

This invention relates to token readers, that is to say, apparatus for reading electronically coded information carried on a flat token, usually in the form of a card. Such apparatus is commonly used, for example, in security systems for verifying coded information carried on a card token to perform a security check before allowing a token holder access to a restricted area. In such apparatus the verification of the data carried by the token may automatically release a door lock.

One known form of such a token reader is described in British Patent Specification No. 1459185 and comprises, in combination: means for producing a varying magnetic field; an array of coils, each constituted by a substantially planar spiral of conductive material carried by a substantially planar insulating support, for producing respective signals in response to changes in said field; and a receiving zone for receiving a token having magnetic field affecting means for reducing the magnetic coupling between the field producing means and certain ones of the coils in dependence upon the arrangement of the magnetic field affecting means whereby, when such a token is in said zone, the signals produced by the respective coils correspond to the arrangement of the magnetic field affecting means of the token.

The magnetic field producing means of the token reader described and claimed in specification 1459185 are designed to produce a dynamic, that is varying, magnetic field across the token receiving zone.

The magnetic field means may comprise a plurality of magnetic cores and winding means for substantially simultaneously energising the core, either in the form of individual windings, one for each core, electrically connected together, or in the form of a number of turns encircling a region co-extensive with the array of coils and containing a number of magnetic cores. The purpose of the winding means and the associated cores is to produce the magnetic fields of equal strength at each of the coils of the array.

An object of the present invention is to provide an improved token reader of the general type referred to above in which the means for producing the varying magnetic field are simpler and more compact than the means described in U.K. patent specification no. 1459185.

According to the present invention there is provided a token reader comprising a first array of flat spiral transmitter coils for producing a magnetic field with a spatial variation, a second array of flat spiral receiver coils parallel to the first array and spaced therefrom by a receiving zone for receiving a token having magnetic field modifying means in a predetermined arrangement such that, when a said token is inserted in the receiving zone, the signals induced in the receiver coils by the magnetic field of the transmitter coils corresponds to the arrangement of the field modifying means of the token.

The use of an array of flat spiral coils to produce the requisite varying magnetic field in the token receiving zone enables adequate discrimination of the magnetic field to be achieved by the receiver coils, without resort to the field producing means described in U.K. specification 1459185. Consequently, the power consumption of the token reader using the field producing flat coil array of the present invention is substantially reduced, typically by a factor of 50:1, compared with that of comparable previously known token readers exemplified by U.K. specification 1459185.

The token reader according to the present invention also has the advantage of simplicity from the manufacturing standpoint, since the array of flat spiral transmitter coils is substantially identical to the array of flat spiral receiver coils. The two arrays of coils may be mounted upon respective planar parallel insulating supports. In a preferred embodiment of the invention each array of coils would be in the form of a printed circuit on an insulating substrate.

The token for use with the token reader of the present invention preferably comprises a flat member of insulating or non-magnetic material carrying a number of conductive or magnetic elements concealed within the member and arranged in a predetermined configuration.

The token reader may further include electronic comparator means for comparing the signals induced in the receiver coils with reference codes derived, for example, from a keyboard and/or from stored data, acceptance or rejection of the inserted token being conditional on the output of the comparator means. If the comparator means accepts the inserted token it produces an output signal which may, for example, be used to release a door lock. With such an arrangement it is possible to identify token holders at a security checkpoint and, by using the token reader to control operation of a door lock, to restrict access to certain token holders only.

In a preferred embodiment of the invention the receiver coils are connected to respective capacitors to form with the coils respective resonant circuits which are connected to detector means.

Preferably the resonant circuits are connected through switching means to a common detector circuit. The switching means may be a multiplexing electronic switching circuit or an electronically controlled multiple-way switching device.

The invention will be further described, by way of example, with reference to the accompanying purely schematic drawings, in which:

Figure 1 illustrates a practical application of a token reader according to the invention;

Figure 2 is a schematic view illustrating the general arrangement of a token reader according to one embodiment of the invention;

Figure 3 is a plan view of the token reader illustrated in Figure 2, and

Figure 4 is a plan view, corresponding to Figure 3, of a token reader according to another embodiment of the invention.

The same reference numerals are used throughout the drawings to designate the same or corresponding component parts.

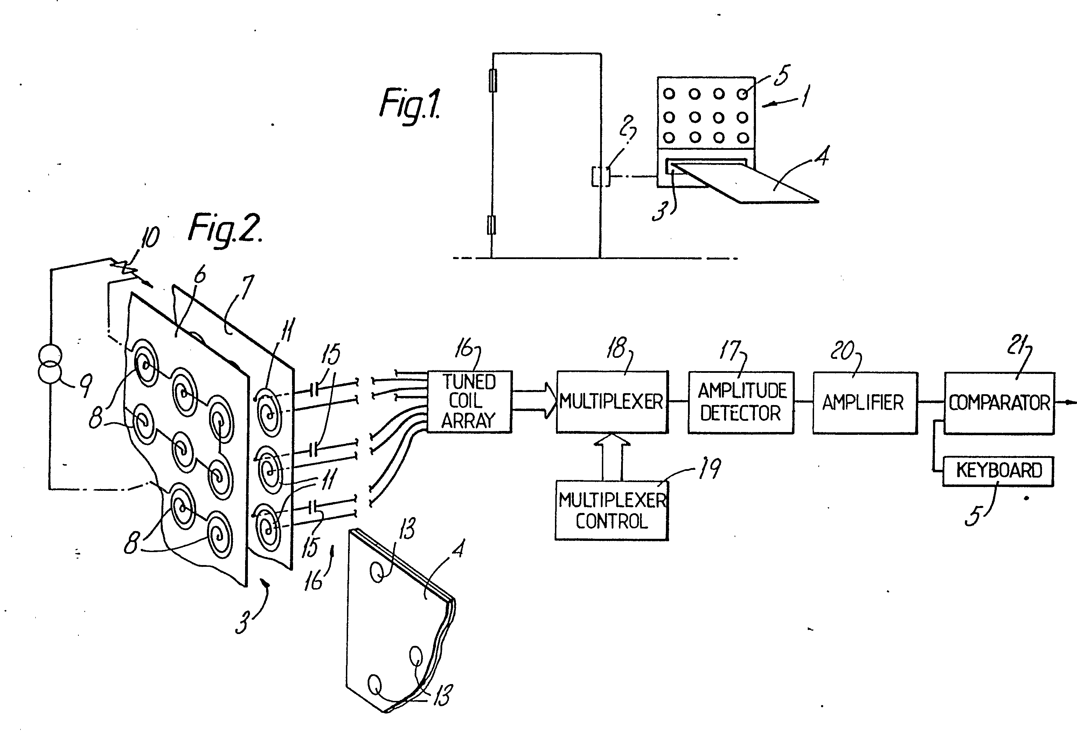

Figure 1 illustrates diagrammatically a wall-mounted token reader 1 associated with an electro--mechanical door lock 2. The token reader 1 has an access slot 3 into which a card token 4 is inserted by the token holder. The token reader 1 also has a manual keyboard 5 on which an identity or reference number is entered by the token holder.

The token reader 1 compares a number or other data encoded on the token 4 with the identity or reference number entered on the keyboard 5 and releases the door lock 2 only if a predetermined correspondence is established between the token code and the identity or reference number.

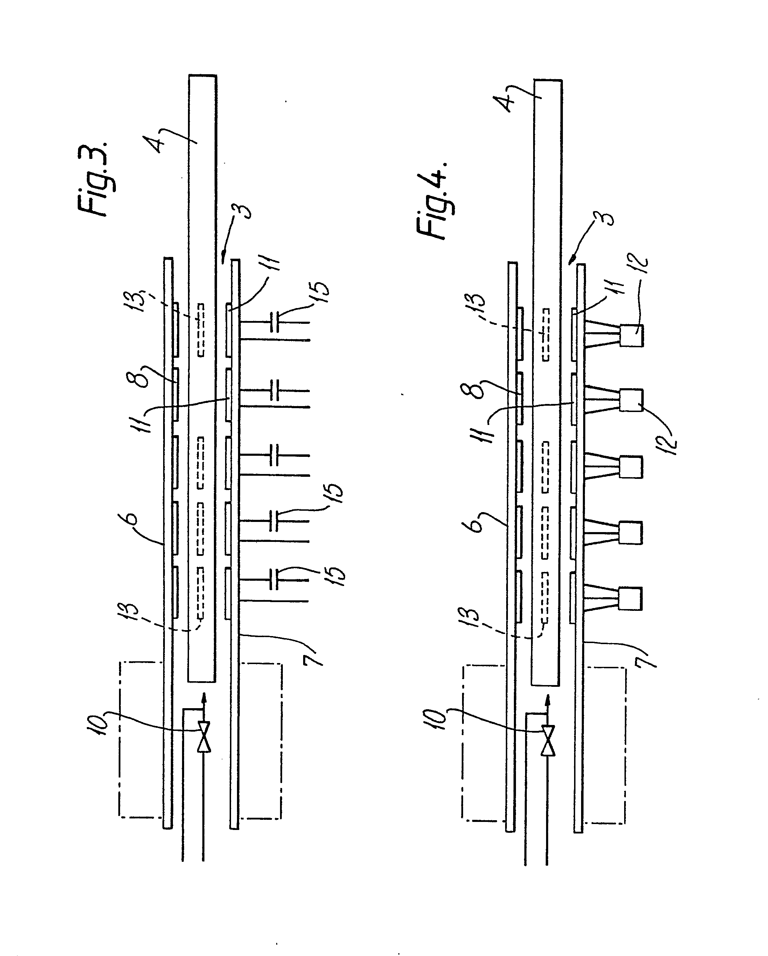

Figures 2 and 3 illustrate diagrammatically an embodiment of the token reader 1 according to the

- 6 -

invention in which the token 4 is in the form of a flat card, for example of laminated plastics material, which is inserted through the slot 3 into a receiving zone defined between two parallel flat insulating supports formed by respective printed circuit boards

6, 7. The printed circuit board 6 is provided with a first array of flat spiral transmitter coils 8 printed on the circuit board 6. The transmitter coils 8 are 9-turn coils arranged, in this example, in a

5 x 5 array, the coils being connected electrically in series with an alternating current source 9 in a circuit which includes a proximity or other convenient switch 10 arranged to be closed only when the token 4 is fully inserted into the receiving zone.

The printed circuit board 7 carries a second

array of flat spiral receiver coils 11 each in the form of a 9-turn planar spiral coil printed on the circuit board 7 and connected individually to respective capacitors 15 which form with the coils 11 respective resonant circuits 16 (Figure 2). The array of receiver coils 11 is identical to the array of transmitter coils 8 so that respective transmitter and receiver coils 8, 11 are coaxially aligned with each other in pairs across the token receiving zone.

The card token 4 is provided with a number of inserts 13 of conductive material, conveniently aluminium foil, at predetermined locations each aligned with a selected pair of transmitter and receiver coils 8, 11 when the token 4 is fully inserted in the slot 3. The locations of the inserts are concealed upon lamination of the token and correspond to a coded number which is personal to the token holder. To make forgery of the token difficult the locations of the conductive inserts 13 may be concealed by providing within the token additional conductive inserts which are not aligned with coils 8, 11 in the inserted position of the token, or 'dummy' inserts of nonconductive material. The inserts inhibit full electromagnetic magnetic coupling between certain ones of the transmitter coils 8 and the associated receiver coils 11, when the token 4 has been fully inserted in the slot 3 substantially no current is induced in those receiver coils 11 which are shielded by conductive inserts 13. Furthermore, the proximity of the conductive inserts 13 effectively damps and de-tunes the respective resonant circuits 16, providing a strong contrast between the outputs of the resonant circuits 16 in the absence of an insert 13 and the outputs of the same coils when in close proximity to an insert 13. The signal sequence provided by the resonant circuits 16 will in effect correspond to the arrangement of the inserts 13 in the token 4.

The capacitors 15 of the resonant circuits 16 are connected to a common amplitude detector 17 through a scanning switch or multiplexer 18 which serves to connect each resonant circuit 16 in turn to the detector 17.

The multiplexer 18 is a solid state switching circuit which is controlled by control signals derived from a controller 19 which may be in the form of a counter, timer or microprocessor. The output of the detector 17 is passed to an amplifier 20 the output of which will comprise a train of signals representing, uniquely the number encoded by each of the inserts 13 in the sequence predetermined by the multiplexer 18.

The signals provided by the amplifier 20 are compared in a comparator 21 with a reference number or code entered by the token holder using the keyboard 5. The electronic circuit of the comparator 21 may be of any convenient type, for example as described in U.K. Patent Specification No. 1459185. Components of the comparator circuit may be carried on the printed circuit boards 6 and 7.

The multiplexer 18 may be controlled by a micro-processor in the controller 19 so as to sample the voltage across any selected resonant circuit 16, for the purpose of ascertaining the positions of the conductive inserts 13 in the token 4. The multiplexer controller 19 may comprise a microprocessor. This microprocessor may also assume the function of the code comparator 21.

In the alternative embodiment illustrated in Figure 4 the printed circuit board 7 carries a second array of flat spiral receiver coils 11 each in the form of a 7-turn planar spiral coil printed on the circuit board 7 and connected individually to respective transistor amplifiers 12. The array of receiver coils 11 is identical to the array of transmitter coils 8 so that respective transmitter and receiver coils 8, 11 are coaxially aligned with each other in pairs across the token receiving zone.

The transistor amplifiers 12 which are energised in the presence of a card token 4 will correspond to the arrangement of the inserts 13 in the token 4 and the signals produced by the transistor amplifiers 12 will represent uniquely the number encoded by the arrangement of the inserts 13.

The array of signals provided by the transistor amplifiers 12 is compared with a reference number or code entered by the token holder using the keyboard 5.

It will be appreciated that token readers according to the present invention are capable of wide-ranging practical applications in addition to the specific application herein described. For example, in addition to the illustrated use of the token reader in electronic door lock controls the token reader may be employed in personnel identification and movement logging systems. Thus where personnel are employed according to flexible working hours ("flexi-time") the token reader may be used to pass information as to the arrival and departure times of token holders to a recording or memory system, which may be centralised, enabling the hours worked by each token holder to be logged individually.  In the application of the token reader to a personnel movement logging system each individual would again hold a token coded with his personal identification code and the keyboard of the token reader would be used by the token  holder to indicate, for example to a local or central memory, the eventual destination of that individual.  Such personnel movement logging or tracking systems may be employed for safety or security purposes, for example in keeping an up-to-date record of personnel working on an oil rig or in a mine working.  In both these examples the token reader acts in effect as a terminal for a local or centralised memory system.

CLAIMS

1. A token reader of the type comprising means (8) for producing a magnetic field with a spatial variation, and receiver coils (11) spaced from the field producing means by a receiving zone (3) for receiving a token (4) having magnetic field modifying means (13) in a predetermined arrangement, such that, when the token is inserted in the receiving zone, the signals induced in the receiving coils (11) by the magnetic field corresponds to the arrangement of the field modifying means of the token, <u>characterised</u> <u>in that</u> the means for producing the magnetic field comprise a first array of flat spiral transmitter coils (8) and the receiver coils are arranged as a second array of flat spiral coils (11) parallel to the first array.

2. A token reader according to Claim 1, in which the token (4) comprises a flat member of insulating material carrying a number of conductive elements (13) concealed within the insulating material and arranged in a predetermined configuration.

3. A token reader according to Claim 1 or Claim 2, characterised in that the first and second arrays of coils (8, 11) are provided upon respective planar parallel insulating supports (6, 7) as respective printed circuits.

4. A token reader according to any of Claims 1 to 3, including electronic comparator means (21) for comparing the signal induced in the receiver coils (11) with a reference signal derived, for example, from a keyboard (5), the comparator means producing an output signal when the receiver coil signal and the reference signal have a predetermined relationship to each other.

5. A token reader according to any one of the preceding claims, used with a token comprising a flat member (4) of insulating or non-magnetic material carrying a number of conductive or magnetic elements (13) concealed within the member and arranged in a predetermined configuration.

6. A token reader according to any one of the preceding claims, characterised in that the receiver coils (11) are connected to respective resonant circuits (16) which are connected to detector means (17-19).

7. A token reader according to Claim 6, characterised in that each receiver coil (11) is connected to a respective capacitor (15) which forms with the coil a respective said resonant circuit (16).

8. A token reader according to Claim 7, characterised in that the resonant circuits (16) are connected through switching means (18, 19) to a common detector means (17).

9.   A token reader according to Claim 9, in which the switching means (18, 19) comprise a multiplexing electronic switching circuit or an electronically controlled multiple-way switching device.

10.   A token reader according to any one of Claims 1 to 6, characterised in that the receiver coils (11) are connected to respective transistor amplifiers (12).

Fig.1.

Fig.2.

| TUNED COIL ARRAY | MULTIPLEXER | AMPLITUDE DETECTOR | AMPLIFIER | COMPARATOR |
| KEYBOARD |
| MULTIPLEXER CONTROL |

0042707

Fig.3.

Fig.4.

| European Patent Office | EUROPEAN SEARCH REPORT | Application number |
|---|---|---|
| | | EP 81 30 2642 |

| DOCUMENTS CONSIDERED TO BE RELEVANT | | | CLASSIFICATION OF THE APPLICATION (Int Cl ⁹) |
|---|---|---|---|
| Category | Citation of document with indication, where appropriate, of relevant passages | Relevant to claim | G 06 K 7/08 |
| D | US - A - 3 911 252 (GROUP 4 TOTAL SECURITY)<br>* The whole document *<br>& GB - A - 1 459 185<br>---<br>FR - A - 2 074 623 (ALCATEL)<br>* The whole patent *<br>---<br>DE - A - 2 009 962 (ALCATEL)<br>* Figure 1; page 9, line 1 to page 11, 3rd paragraph *<br>& GB - A - 1 276 762<br>--- | 1-5, 10<br><br>1-3<br><br>1-3 | |
| A | FR - A - 1 578 541 (NIPPON TELE-GRAPH AND TELEPHONE) | 1 | |
| A | US - A - 3 740 746 (CIT-ALCATEL) | 1 | |
| | ---------- | | |

**TECHNICAL FIELDS SEARCHED (Int. Cl. ⁹)**

G 06 K 7/08
G 11 C 17/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 01.10.1981 | FORLEN |

EPO Form 1503.1   06.78